# EUROPEAN PATENT APPLICATION

(11) **EP 4 769 669 A1**
(43) Date of publication of application: **01.07.2026**
(21) Application number: 25841492.9
(22) Date of filing: 26.06.2025
(51) Int. Cl.: H01M 10/6569, H01M 10/613, H01M 50/502, H01M 10/625, H01M 10/48

(54) **BATTERY MODULE, AND BATTERY PACK AND VEHICLE INCLUDING SAME**

(30) Priority: 16.07.2024 KR 20240093986
(71) Applicant: LG Energy Solution, Ltd., Seoul 07335 (KR)
(72) Inventor: PARK, Jin-Soo, Daejeon 34122 (KR); KIM, Chang-Hyun, Daejeon 34122 (KR); NA, Jong-Seung, Daejeon 34122 (KR); LEE, So-Jeong, Daejeon 34122 (KR); CHA, Hun, Daejeon 34122 (KR)
(74) Representative: Plasseraud IP
(86) International application number: PCT/KR2025/009008
(87) International publication number: WO 2026/019095

(57) **Abstract**

The present disclosure relates to a battery module including: a plurality of battery cells; a module frame configured to store the plurality of battery cells; an electrical component configured to be electrically connected to the plurality of battery cells; and a spray assembly configured to spray a cooling medium toward the electrical component.

## Description

### TECHNICAL FIELD

The present disclosure relates to a battery module, and a battery pack and vehicle including the same.

This application is based on and claims priority from Korean Patent Application No. 10-2024-0093986, filed on July 16, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack.

A common method for configuring a battery pack by connecting multiple battery cells in series/parallel is performed by preferentially configuring a battery module including one or more battery cells and then by adding other components to one or more battery modules to configure a battery pack or battery rack. Recently, cell-to-pack-type battery packs in which multiple battery cells are directly stored in a pack housing or the like, instead of modularizing the same, have been manufactured.

In a conventional battery module, when a high current is applied during rapid charging of the battery module, the temperature of the electrical components such as a module terminal increases significantly. To solve this, the thickness or width of the electrical component such as a module terminal may be increased, but this reduces the space utilization of the battery module 10 and increases the cost.

Therefore, it is necessary to develop a structure capable of suppressing a temperature rise of the electrical components such as a module terminal during rapid charging of the battery module.

### DISCLOSURE

### Technical Problem

The present disclosure is designed to solve the problems of the related art, and therefore the present disclosure is directed to providing a battery module capable of suppressing a temperature rise of electrical components such as module terminals during rapid charging of the battery module, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; a module frame configured to store the plurality of battery cells; an electrical component configured to be electrically connected to the plurality of battery cells; and a spray assembly configured to spray a cooling medium toward the electrical component.

The spray assembly may be configured to spray the cooling medium when a temperature of the electrical component is equal to or more than a specific temperature.

The cooling medium sprayed from the spray assembly may be configured to evaporate and cool the electrical component.

The battery module according to an embodiment of the present disclosure may further include a temperature sensor configured to measure a temperature of the electrical component.

The cooling medium may be configured to spray from the spray assembly when the temperature of the electrical component measured by the temperature sensor is equal to or more than a specific temperature.

The spray assembly may include a storage compartment configured to store the cooling medium, and a spray nozzle configured to spray the cooling medium stored in the storage compartment toward the electrical component.

The spray assembly may include a pump configured to move the cooling medium from the storage compartment to the spray nozzle.

The storage compartment may be configured to recover the cooling medium sprayed toward the electrical component.

The battery module according to an embodiment of the present disclosure may further include a bus-bar frame configured to cover at least one side of the plurality of battery cells and having the electrical component provided therein, and the bus-bar frame may include a partition configured to suppress movement of the cooling medium sprayed from the spray assembly.

The spray assembly may be configured to spray at least one of a first cooling medium and a second cooling medium having different boiling points.

The spray assembly may include a first storage compartment configured to store the first cooling medium, and a second storage compartment provided separately from the first storage compartment and configured to store the second cooling medium.

The spray assembly may be configured to control whether at least one of the first cooling medium and the second cooling medium is sprayed depending on the temperature of the electrical component.

The spray assembly may include a valve configured to open and close a path through which the first cooling medium moves.

The spray assembly may be configured such that the first cooling medium and the second cooling medium are sprayed in a first temperature range, and such that the second cooling medium is sprayed in a second temperature range higher than the first temperature range.

The first cooling medium may include acetone, and the second cooling medium may include water.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, since a cooling medium may be sprayed onto electrical components such as module terminals to cool the electrical components such as module terminals using its latent heat of vaporization, it is possible to effectively suppress a temperature rise of the electrical components such as module terminals during rapid charging of the battery module.

Furthermore, according to one aspect of the present disclosure, different types of cooling media having different boiling points may be sprayed depending on the temperature of the electrical component such as a module terminal, so the cooling media can be evaporated more quickly.

In addition, according to one aspect of the present disclosure, since the thickness or width of the module terminal can be minimized, thereby increasing the space utilization of the battery module. Accordingly, the energy efficiency of the battery module can be increased.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a drawing schematically illustrating the primary configuration included in a battery module according to an embodiment of the present disclosure.
FIG. 4 is a drawing schematically illustrating the configuration of a spray assembly included in a battery module according to an embodiment of the present disclosure.
FIG. 5 is a drawing illustrating the configuration of a spray assembly included in a battery module according to an embodiment of the present disclosure.
FIG. 6 is a drawing schematically illustrating the configuration of a spray assembly included in a battery module according to another embodiment of the present disclosure.
FIG. 7 is a drawing illustrating the configuration of a spray assembly included in a battery module according to another embodiment of the present disclosure.
FIG. 8 is a perspective view illustrating a bus-bar frame included in a battery module according to another embodiment of the present disclosure.
FIG. 9 is a drawing schematically illustrating the configuration of a spray assembly included in a battery module according to another embodiment of the present disclosure.
FIG. 10 is a drawing illustrating the configuration of a spray assembly included in a battery module according to another embodiment of the present disclosure.
FIG. 11 is a drawing illustrating an example of the operation of a spray assembly in a first temperature range in a battery module according to another embodiment of the present disclosure.
FIG. 12 is a drawing illustrating an example of the operation of a spray assembly in a second temperature range in a battery module according to another embodiment of the present disclosure.
FIG. 13 is a schematic perspective view of a battery pack according to an embodiment of the present disclosure.
FIG. 14 is a schematic perspective view of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction), i.e., a height direction of the battery cell, perpendicular to both the X-axis direction and the Y-axis direction.

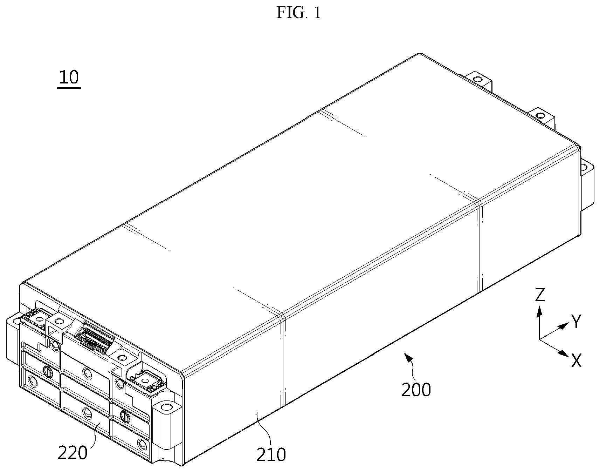

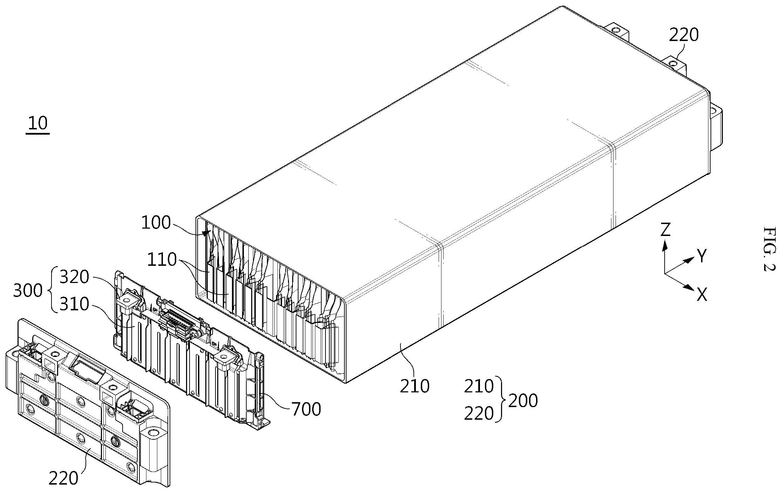

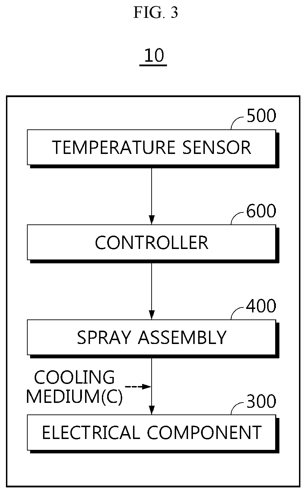

FIG. 1 is an overall perspective view of a battery module according to an embodiment of the present disclosure, FIG. 2 is an exploded perspective view of a battery module according to an embodiment of the present disclosure, and FIG. 3 is a drawing schematically illustrating the primary configuration included in a battery module according to an embodiment of the present disclosure.

Referring to FIGS. 1 to 3, a battery module 10 according to the present disclosure includes a battery cell 100, a module frame 200, an electrical component 300, and a spray assembly 400.

The battery cell 100 may include an electrode assembly, a cell case that stores the electrode assembly, and an electrode lead that is connected to the electrode assembly and extends to the outside of the cell case, thereby functioning as an electrode terminal.

In this case, the cell case may be configured in various types of cases, and the battery cells may be classified into a pouch-type cell, a cylindrical cell, or a prismatic cell depending on the shape of the cell case. Since the types of the battery cells 100 were widely known at the time of filing of the present disclosure, a detailed description thereof will be omitted. Although the pouch-type battery cell is illustrated in the drawings of this specification, the present disclosure may be applicable to all types of secondary batteries known at the time of filing of the present disclosure, and is not limited to a specific type of secondary battery.

The battery cell 100 may be provided in plurality. Here, the battery cell 100 may indicate one secondary battery itself, or may indicate a group of multiple secondary batteries. In this specification, a description will be made based on the battery cell 100 representing one secondary battery.

The plurality of battery cells 100 may be configured to be stacked in one direction. For example, the plurality of battery cells 100 may be arranged in a parallel along the left-right direction (±X-axis direction).

The module frame 200 may be configured to store the plurality of battery cells 100. Specifically, a storage space may be formed in the module frame 200, and the storage space may be configured to store the plurality of battery cells 100. For example, the module frame 200 may be configured in a cuboid shape by combining multiple parts. The module frame 200 may be at least partially made of metal and/or plastic materials.

The module frame 200 may include a case body 210 and end plates 220 disposed on the front and rear sides of the case body 210.

The case body 210 may be configured in the form of a square tube having openings at both ends in the longitudinal direction, and a hollow space formed therein. For example, the case body 210 may be configured in the shape of a tube having an upper surface, a lower surface, a left surface, and a right surface, and having front and rear openings.

In addition, the case body 210 may be formed in various other shapes. For example, the case body 210 may be configured in an integrated form of a left plate, a right plate, and a lower plate. In this case, the integrated case may be referred to as a U-frame. The U-frame may be configured into a tube shape by welding a top plate to its upper side. Alternatively, the case body 210 may include a box-shaped lower case in which the left plate, right plate, front plate, and rear plate are integrated, and an upper cover configured to clover the upper opening of the lower case.

The end plate 220 may be provided to be coupled to the opening of the case body 210. For example, the end plate 220 may be configured such that its inner surface (the surface facing the opening) is made of an insulating material and its outer surface (the surface forming the exterior of the battery module 10) is made of a metal material. In addition, the end plate 220 may be partially provided with holes or slits for exposing components that are required to be exposed to the outside, such as positive and negative electrode terminals or a connector of the battery module 10.

Although not shown in the drawing, the module frame 200 may have a venting hole formed on at least one side to discharge venting gas generated from the battery cell 100 to the outside of the module frame 200.

The electrical component 300 may be configured to be electrically connected to a plurality of battery cells 100. In particular, the electrical component 300 may be configured to be electrically connected to the electrode leads 120 of the battery cells 100. Through this electrical connection, the electrical component 300 may be configured to transmit status information about the battery cells 100 to an external component. For example, the electrical component 300 may be configured to transmit voltage information of the battery cells 100 to an external control device such as a BMS (Battery Management System).

The spray assembly 400 may be configured to spray a cooling medium C. The spray assembly 400 may be configured to spray a cooling medium C toward the electrical component 300. The cooling medium C may be a liquid. The cooling medium C may be sprayed to wet the electrical component 300.

When a high current is applied during rapid charging of the battery module 10, the temperature of the electrical component 300 may rise significantly. However, according to the above-implemented configuration of the present disclosure, the electrical component 300 may be cooled by the cooling medium C sprayed onto the electrical component 300. Accordingly, the temperature rise of the electrical component 300 may be effectively suppressed.

In addition, since there is no need to increase the thickness or width of the electrical component 300 to suppress the temperature rise of the electrical component 300, the space utilization of the battery module 10 may be increased. Accordingly, the energy efficiency of the battery module 10 may be increased.

Referring to FIG. 2, the electrical component 300 may include a bus-bar 310 and a module terminal 320. The bus-bar 310 may be configured to be in contact with the electrode lead 120. The bus-bar 310 may be provided on the inner side of the bent electrode lead 120 of the battery cell 100. A plurality of bus-bars 310 may be provided.

The bus-bar 310 may be made of an electrically conductive material for transmitting an electrical signal. For example, the bus-bar 310 may be made of a material such as copper or aluminum.

The bus-bar 310 may be configured in a form capable of securing a sufficient contact area with the electrode lead 120. For example, the bus-bar 310 may be formed in a bar shape to extend in the up-down direction with a flat inner surface.

The module terminal 320 may be configured to be connected to the bus-bar 310 provided on the outermost side, among the plurality of bus-bars 310. Two module terminals 320 may be provided on both sides in the widthwise direction of the battery module 10. At least a portion of the module terminal 320 may be configured to be exposed to the outside of the module frame 200. The module terminal 320 may be electrically connected to another battery module 10 through the exposed portion.

In particular, the spray assembly 400 may be configured to spray a cooling medium C toward the module terminal 320. For example, two module terminals 320 may be provided on both sides in the widthwise direction of the battery module 10, and two spray assemblies 400 may also be provided on both sides in the widthwise direction of the battery module 10.

The spray assembly 400 may be directly or indirectly connected to the electrical component 300. The spray assembly 400 may be operated electronically or mechanically depending on the temperature of the electrical component 300.

That is, the spray assembly 400 may be configured to spray a cooling medium C depending on the temperature of the electrical component 300. The spray assembly 400 may be configured to spray a cooling medium C when the temperature of the electrical component 300 is equal to or more than a specific temperature. Here, the specific temperature may indicate the temperature of the electrical component 300 which may cause a problem during rapid charging of the battery module 10.

In particular, the cooling medium C sprayed from the spray assembly 400 may be configured to evaporate and cool the electrical component 300. That is, the cooling medium C may be configured to evaporate and absorb the heat of the electrical component 300 to suppress a temperature rise of the electrical component 300.

In this case, the specific temperature may indicate the boiling point of the cooling medium C. For example, if the cooling medium C is water, the specific temperature may be approximately 100°C. That is, if the temperature of the electrical component 300 rises and reaches the boiling point of the cooling medium C, the sprayed cooling medium C may evaporate and cool the electrical component 300.

As an example, referring to FIG. 3, the battery module 10 according to an embodiment of the present disclosure may further include a temperature sensor 500. The temperature sensor 500 may be configured to directly or indirectly measure the temperature of the electrical component 300. The temperature sensor 500 may be configured to measure the temperature around the electrical component 300.

The battery module 10 according to an embodiment of the present disclosure may further include a controller 600. The controller 600 may be configured to be electrically or communicatively connected to the temperature sensor 500. The controller 600 may be configured to receive temperature information of the electrical component 300 measured by the temperature sensor 500. The controller 600 may be configured to transmit the temperature information to an external control device such as a BMS (Battery Management System).

In addition, the battery module 10 according to an embodiment of the present disclosure may be configured to spray the cooling medium C from the spray assembly 400 when the temperature of the electrical component 300 measured by the temperature sensor 500 is equal to or more than a specific temperature. In this case, the controller 600 may be configured to be electrically or communicatively connected to the spray assembly 400.

That is, the controller 600 may be configured to receive information about the temperature of the electrical component 300 measured by the temperature sensor 500 and operate the spray assembly 400 when the measured temperature is equal to or more than a specific temperature. Accordingly, the spray assembly 400 may spray the cooling medium C toward the electrical component 300.

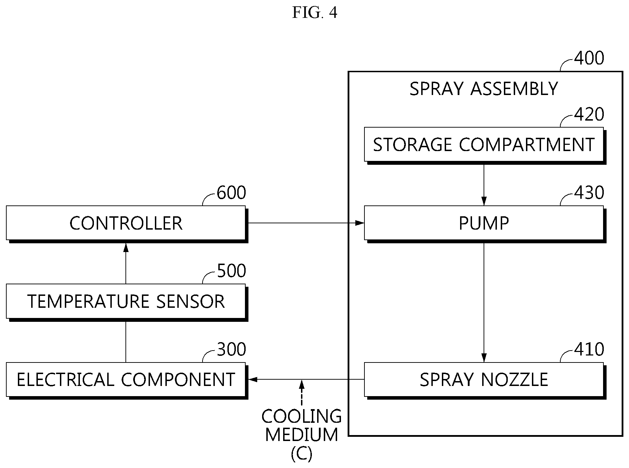

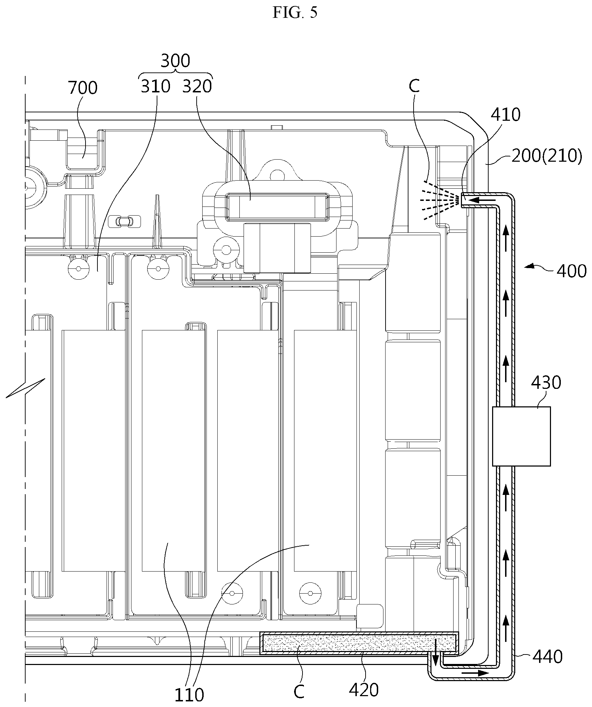

FIG. 4 is a drawing schematically illustrating the configuration of a spray assembly included in a battery module according to an embodiment of the present disclosure, and FIG. 5 is a drawing illustrating the configuration of a spray assembly included in a battery module according to an embodiment of the present disclosure.

The configuration of the spray assembly 400 will be described in detail with reference to FIGS. 4 and 5. The spray assembly 400 may be provided at least partially outside the module frame 200. The spray assembly 400 may be configured so that its portion passes through the module frame 200 to be directed toward the electrical component 300.

More specifically, the spray assembly 400 may have a storage compartment 420 and a spray nozzle 410.

The storage compartment 420 may be configured to store a cooling medium C. The storage compartment 420 may be configured in a rectangular box shape. The storage compartment 420 may be provided inside the module frame 200. The storage compartment 420 may be provided on one side of the electrical component 300. For example, as disclosed in the embodiment illustrated in FIG. 5, the storage compartment 420 may be provided below the electrical component 300.

The storage compartment 420 may be configured to be attachable and detachable. Accordingly, the management convenience of the battery module 10 may be improved.

The spray nozzle 410 may be configured to be connected to the storage compartment 420. The spray nozzle 410 may be configured to be directed toward the electrical component 300. The spray nozzle 410 may be configured to spray the cooling medium C stored in the storage compartment 420 onto the electrical component 300.

A portion of the spray nozzle 410 may be provided outside the module frame 200. In addition, the remaining portion of the spray nozzle 410 may pass through the module frame 200 to be directed toward the electrical component 300.

In addition, the spray assembly 400 may include a pump 430. The pump 430 may be configured to be connected to the storage compartment 420. In addition, the pump 430 may be configured to be connected to the spray nozzle 410. The pump 430 may be configured to move the cooling medium C from the storage compartment 420 to the spray nozzle 410. The pump 430 may be provided outside the module frame 200.

The spray assembly 400 may include a connecting pipe 440 configured to connect the pump 430 and the storage compartment 420. The connecting pipe 440 may be provided outside the module frame 200. As a specific example, the storage compartment 420 may have an outlet hole, and the connecting pipe 440 may be connected to the outlet hole.

Accordingly, as disclosed in the embodiment illustrated in FIG. 4, the cooling medium C provided in the storage compartment 420 may be moved to the pump 430 through the connecting pipe 440 and sprayed onto the electrical component 300 through the spray nozzle 410.

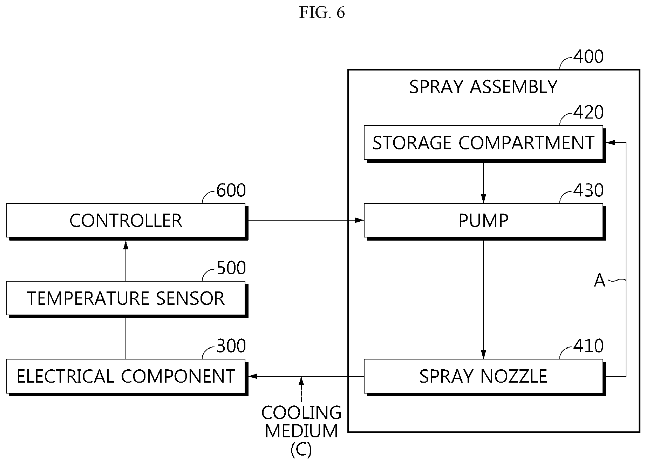

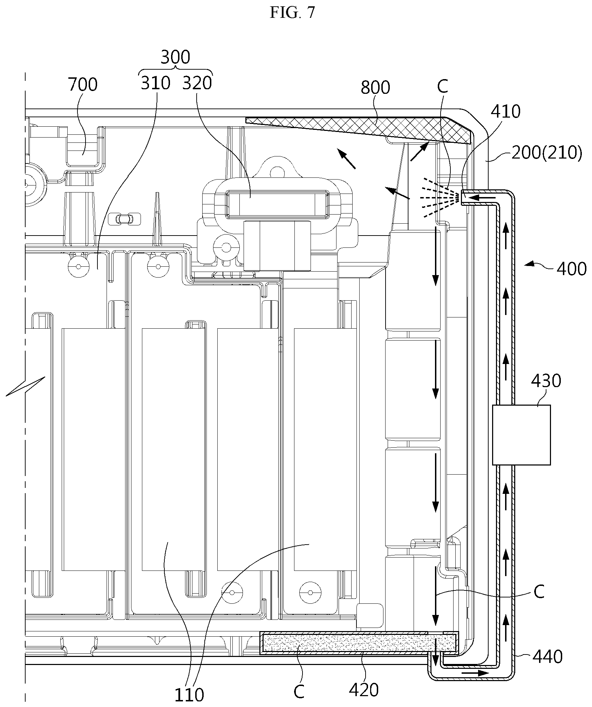

FIG. 6 is a drawing schematically illustrating the configuration of a spray assembly included in a battery module according to another embodiment of the present disclosure, and FIG. 7 is a drawing illustrating the configuration of a spray assembly included in a battery module according to another embodiment of the present disclosure.

As another embodiment, referring to FIGS. 6 and 7, the spray assembly 400 may be configured to recycle the sprayed cooling medium C. Specifically, referring to part A in FIG. 6 and the bold arrows in FIG. 7, the storage compartment 420 may be configured to recover the sprayed cooling medium C.

For example, the cooling medium C sprayed from the spray nozzle 410, which has not evaporated, may be recovered in a liquid state and then transferred to the storage compartment 420. Alternatively, the cooling medium C sprayed from spray nozzle 410 in a gaseous state and then liquefied again at a specific temperature or below may be recovered to the storage compartment 420.

According to the above-implemented configuration of the present disclosure, even if a cooling medium C is not added to the storage compartment 420, a predetermined amount of cooling medium C may remain in the storage compartment 420, so that management efficiency of battery module 10 may be secured. In addition, the risk of a short circuit occurring due to the cooling medium C overflowing from the storage compartment 420 may be minimized by filling the storage compartment 420 with only a minimum amount of cooling medium C.

Referring to FIG. 2 and FIG. 7, the battery module 10 according to an embodiment of the present disclosure may further include a bus-bar frame 700. The bus-bar frame 700 may be provided inside the module frame 200. The bus-bar frame 700 may be configured to cover at least one side of a plurality of battery cells 100. The bus-bar frame 700 may be located on the side of the battery cells 100 from which the electrode leads 120 extend outward. For example, the bus-bar frame 700 may be coupled to the front and rear sides of the plurality of battery cells 100, respectively. The bus-bar frame 700 may have slits through which the electrode leads 120 of the battery cells 100 may extend outward in the front-back direction.

The bus-bar frame 700 may be provided with an electrical component 300. The bus-bar frame 700 may be configured so that the electrical component 300 may be attachable to its outer surface. The bus-bar frame 700 may be made of a material having electrical insulation, such as a plastic material.

The electrode leads 120 of the battery cells 100 may pass through the slits of the bus-bar frame 700 and extend outside the bus-bar frame 700, and the extending portion may be attached to the surface of the bus-bar 310 by welding or the like.

In addition, the battery module 10 according to an embodiment of the present disclosure may further include a guide member 800. The guide member 800 may be configured to guide, to the storage compartment 420, the cooling medium C sprayed from the spray nozzle 410 and then recovered to the storage compartment 420. The guide member 800 may be provided on the outer surface of the bus-bar frame 700. In addition, the guide member 800 may be provided inside the upper surface of the module frame 200. The guide member 800 may be provided above the electrical component 300.

Referring to the embodiment illustrated in FIG. 7, the guide member 800 may be configured with a lower surface in an oblique shape. The guide member 800 may have a lower surface that is inclined downward in a direction away from the electrical component 300. In particular, the guide member 800 may have a lower surface that is inclined downward in a direction away from the bus-bar 310.

Accordingly, the cooling medium C sprayed through the spray assembly 400 may move to the outside of the bus-bar frame 700 along the lower surface of the guide member 800. Therefore, according to the above-implemented configuration of the present disclosure, when the cooling medium C is recovered to the storage compartment 420, the cooling medium C may not be directed toward the electrical component 300, in particular, the bus-bar 310, so that the occurrence of a short circuit may be minimized. As a result, the safety of the battery module 10 may be secured.

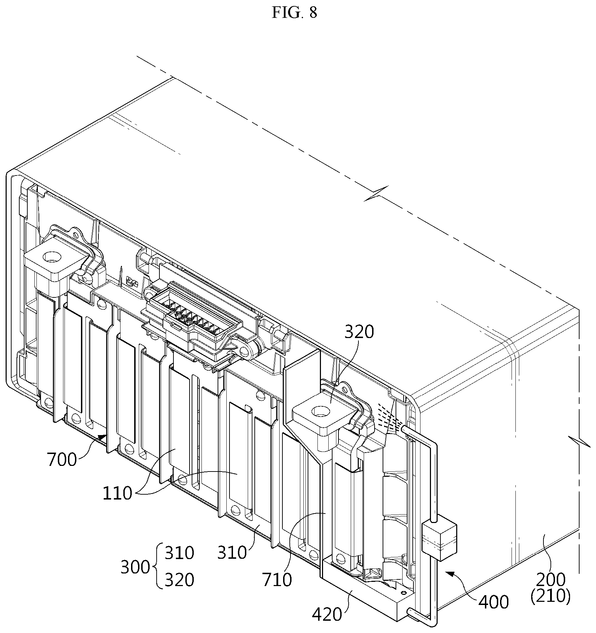

FIG. 8 is a perspective view illustrating a bus-bar frame included in a battery module according to another embodiment of the present disclosure.

If the cooling medium C sprayed from the spray assembly 400 moves to a part other than the electrical component 300, there is a risk of a short circuit occurring. To solve this, the bus-bar frame 700 may include a partition 710. The partition 710 may be configured to suppress the movement of the cooling medium C sprayed from the spray assembly 400.

For example, as disclosed in the embodiment illustrated in FIG. 8, the partition 710 may be provided between the module terminal 320 and another bus-bar 310. The partition 710 may be configured to protrude outward from the outer surface of the bus-bar frame 700. The partition 710 may be configured to prevent the cooling medium C sprayed onto the module terminal 320 from moving toward another bus-bar 310 or another electrode lead 120.

According to the above-implemented configuration of the present disclosure, since the partition 710 is provided on the bus-bar frame 700, the cooling medium C sprayed from the spray assembly 400 is prevented from moving to other components, so that the occurrence of a short circuit may be minimized. Accordingly, the safety of the battery module 10 may be secured.

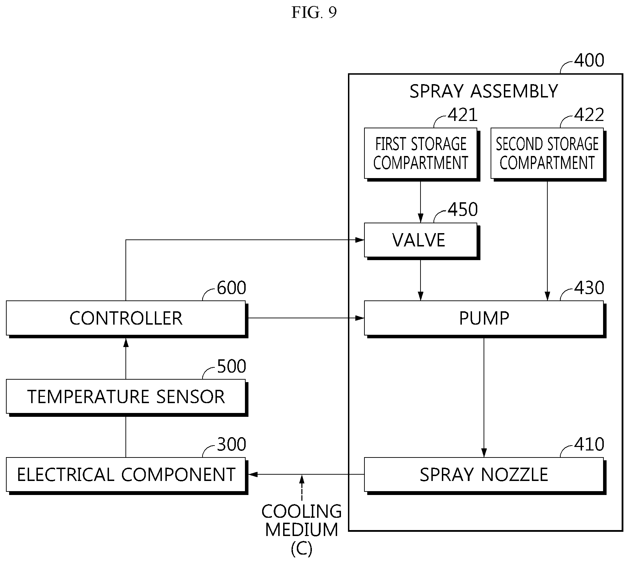

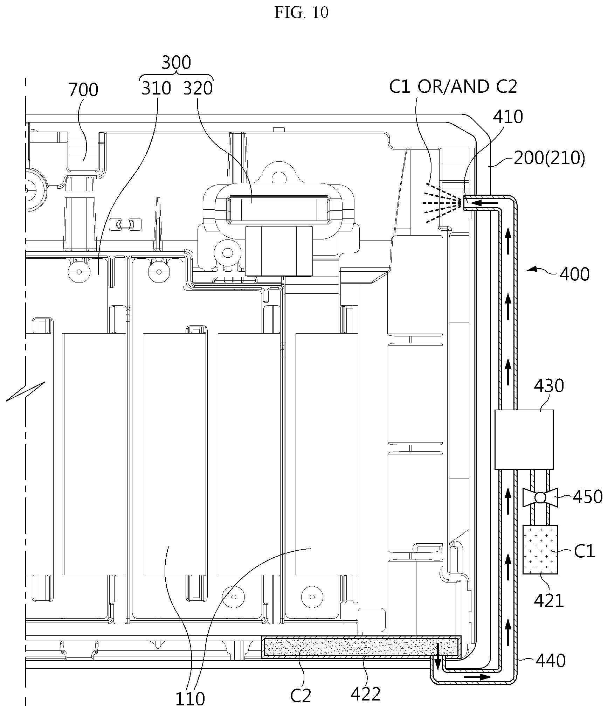

FIG. 9 is a drawing schematically illustrating the configuration of a spray assembly included in a battery module according to another embodiment of the present disclosure, and FIG. 10 is a drawing illustrating the configuration of a spray assembly included in a battery module according to another embodiment of the present disclosure.

As another embodiment, the spray assembly 400 may be configured to spray multiple types of cooling media C rather than one type. For example, the spray assembly 400 may be configured to spray multiple cooling media C having different boiling points. For example, as disclosed in the embodiments illustrated in FIGS. 9 and 10, the spray assembly 400 may be configured to spray at least one of a first cooling medium C1 and a second cooling medium C2 having different boiling points.

Accordingly, at least one of the first cooling medium C1 and the second cooling medium C2 may be sprayed and selectively evaporated depending on the temperature of the electrical component 300. Therefore, according to the above-implemented configuration of the present disclosure, the electrical component 300 may be cooled more quickly and effectively by the cooling media C.

In this case, the spray assembly 400 may have a first storage compartment 421 and a second storage compartment 422. The first storage compartment 421 may be configured to store the first cooling medium C1. The first storage compartment 421 may be configured to be connected to a pump 430. The spray assembly 400 may have a first connecting pipe 440 configured to connect the first storage compartment 421 and the pump 430.

The second storage compartment 422 may be configured to store the second cooling medium C2. The second storage compartment 422 may be provided separately from the first storage compartment 421. The second storage compartment 422 may be configured to be connected to the pump 430. The spray assembly 400 may have a second connecting pipe 440 configured to connect the second storage compartment 422 and the pump 430.

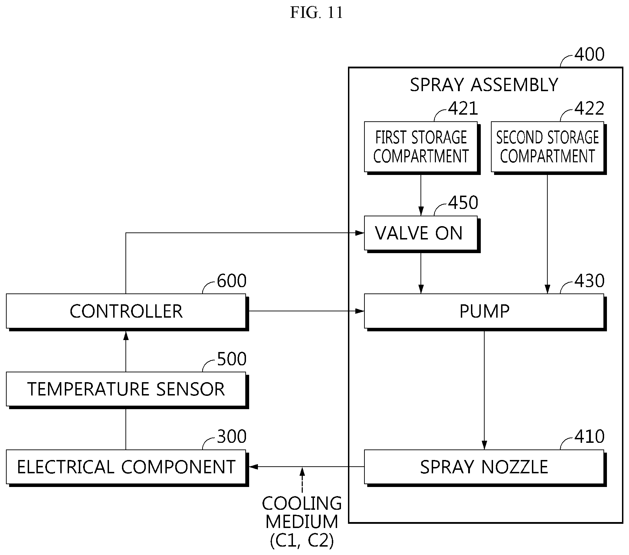

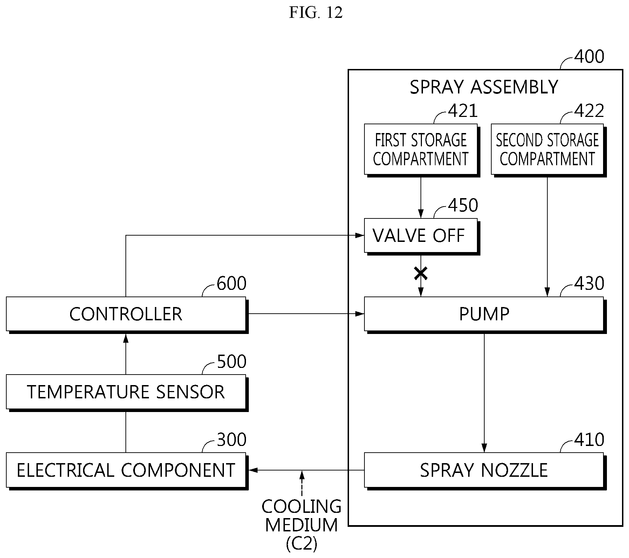

FIG. 11 is a drawing illustrating an example of the operation of a spray assembly in a first temperature range in a battery module according to another embodiment of the present disclosure, and FIG. 12 is a drawing illustrating an example of the operation of a spray assembly in a second temperature range in a battery module according to another embodiment of the present disclosure.

Referring to FIGS. 11 and 12, the spray assembly 400 may be configured to control whether at least one of the first cooling medium C1 and the second cooling medium C2 is sprayed depending on the temperature of the electrical component 300. That is, the temperature sensor 500 may sense the temperature of the electrical component 300 and transmit the same to the controller 600, and the controller 600 may be configured to determine the type of cooling medium C to be sprayed from the spray assembly 400 depending on the transmitted temperature of the electrical component 300.

Accordingly, only one of the first cooling medium C1 and the second cooling medium C2 may be sprayed from the spray assembly 400, or both the first cooling medium C1 and the second cooling medium C2 may be sprayed.

In addition, the spray assembly 400 may include a valve 450. The valve 450 may be configured to open and close a path through which the first cooling medium C1 moves. The valve 450 may be provided between the first storage compartment 421 and the pump 430. The valve 450 may be provided in the first connecting pipe 440. The valve 450 may be configured to be opened by the controller 600 at a specific temperature. When the valve 450 is opened at a specific temperature, the first cooling medium C1 may be sprayed, and the valve 450 may remain in the closed state at temperatures less than the specific temperature, so that the first cooling medium C1 may not be sprayed.

In particular, the spray assembly 400 may spray the first cooling medium C1 and the second cooling medium C2 in a first temperature range. In addition, the spray assembly 400 may be configured to spray the second cooling medium C2 in a second temperature range. That is, the spray assembly 400 may be configured so that the first cooling medium C1 is not sprayed in the second temperature range. In this case, the second temperature range may be configured higher than the first temperature range.

For example, the first temperature range may be defined from the boiling point of the first cooling medium C1 up to a temperature below the boiling point of the second cooling medium C2. If the temperature of the electrical component 300 falls within the first temperature range, the valve 450 may be opened (ON) so that the first cooling medium C1 may move to the spray nozzle 410. As a result, the spray assembly 400 may spray both the first cooling medium C1 and the second cooling medium C2. In this case, the first cooling medium C1 may evaporate, and the second cooling medium C2 may not evaporate. The second cooling medium C2 that has not evaporated may be recovered to the second storage compartment 422.

In addition, for example, the second temperature range may be defined from the boiling point of the second cooling medium C2 to higher temperatures. If the temperature of the electrical component 300 falls outside the second temperature range, the valve 450 may be closed (OFF) so that the first cooling medium C1 may not move to the spray nozzle 410. As a result, the spray assembly 400 may spray only the second cooling medium C2. In this case, the second cooling medium C2 may evaporate to absorb the heat of the electrical component 300 and cool the electrical component 300.

According to the above-implemented configuration of the present disclosure, whether to spray the first cooling medium C1 is determined based on the boiling points of the first cooling medium C1 and the second cooling medium C2, so that a cooling medium C capable of more effectively cooling the electrical component 300 may be sprayed depending on the temperature of the electrical component 300. Accordingly, the temperature rise of the electrical component 300 may be suppressed more effectively.

For example, the electrical component 300 may have a temperature of about 50 to 100°C depending on the current application situation. The cooling medium C may include a substance having a boiling point similar to the temperature of the electrical component 300. As a specific example, the first cooling medium C1 may include acetone (CH₃COCH₃), and the second cooling medium C2 may include water (H₂O). The boiling point of acetone is approximately 56.1 °C, and the boiling point of water is approximately 100°C.

That is, the first temperature range may be configured to be from 56.1°C to less than 100°C. When the temperature of the electrical component 300 falls within the first temperature range, the valve 450 may be opened so that acetone moves from the first storage compartment 421 to the spray nozzle 410, and acetone and water may be sprayed together from the spray nozzle 410. In this case, only acetone is evaporated, and water is not evaporated and may be recovered to the second storage compartment. Accordingly, the electrical component 300 may be cooled by the latent heat of evaporation of acetone in the first temperature range.

In addition, the second temperature range may be configured to 100°C or higher. If the temperature of the electrical component 300 falls within the second temperature range, the valve 450 may not be opened so that acetone is not sprayed, and only water may be sprayed from the spray nozzle 410. Accordingly, the electrical component 300 may be cooled by the latent heat of evaporation of water in the second temperature range.

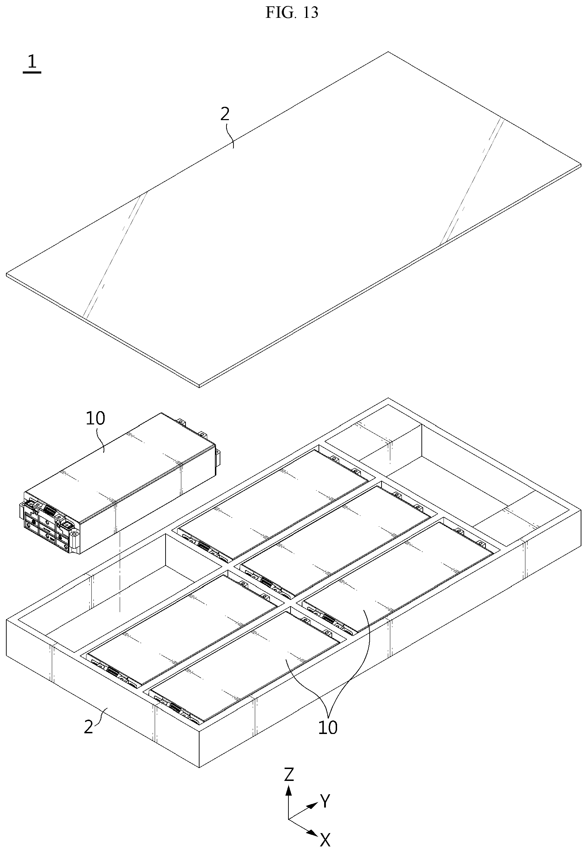

FIG. 13 is a schematic perspective view of a battery pack according to an embodiment of the present disclosure.

Referring to FIG. 13, a battery pack 1 according to an embodiment of the present disclosure may include one or more battery modules 10 according to an embodiment of the present disclosure described above. In addition, the battery pack 1 according to an embodiment of the present disclosure may further include a pack case 2. The pack case 2 may be configured to store a plurality of battery modules 10. The pack case 2 may be formed in a cuboid box shape.

In addition, although not shown in the drawing, the pack case 2 may be configured to store components such as a BMS (Battery Management System), a current sensor, and a fuse for integrated control of charging and discharging of one or more battery cells 100 therein.

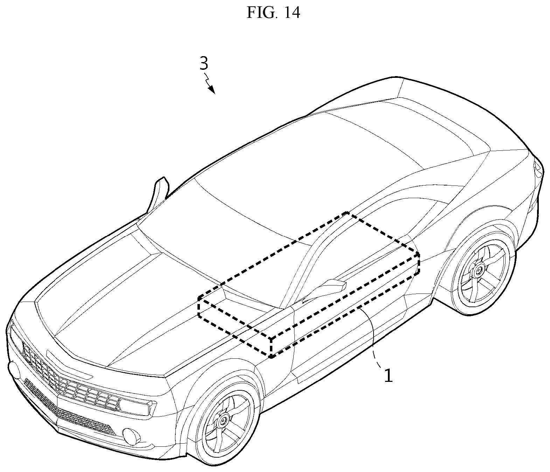

FIG. 14 is a schematic perspective view of a vehicle according to an embodiment of the present disclosure.

Referring to FIG. 14, a vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 may include a four-wheel vehicle and a two-wheel vehicle. The vehicle 3 may run on the power supplied from a battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a module frame configured to store the plurality of battery cells;
an electrical component configured to be electrically connected to the plurality of battery cells; and
a spray assembly configured to spray a cooling medium toward the electrical component.

2. The battery module according to claim 1,
wherein the spray assembly is configured to spray the cooling medium when a temperature of the electrical component is equal to or more than a specific temperature.

3. The battery module according to claim 1,
wherein the cooling medium sprayed from the spray assembly is configured to evaporate and cool the electrical component.

4. The battery module according to claim 1,
further comprising a temperature sensor configured to measure a temperature of the electrical component.

5. The battery module according to claim 4,
wherein the cooling medium is configured to spray from the spray assembly when the temperature of the electrical component measured by the temperature sensor is equal to or more than a specific temperature.

6. The battery module according to claim 1,
wherein the spray assembly comprises
a storage compartment configured to store the cooling medium, and
a spray nozzle configured to spray the cooling medium stored in the storage compartment toward the electrical component.

7. The battery module according to claim 6,
wherein the spray assembly comprises
a pump configured to move the cooling medium from the storage compartment to the spray nozzle.

8. The battery module according to claim 6,
wherein the storage compartment
is configured to recover the cooling medium sprayed toward the electrical component.

9. The battery module according to claim 1,
further comprising a bus-bar frame configured to cover at least one side of the plurality of battery cells and having the electrical component provided therein,
wherein the bus-bar frame comprises a partition configured to suppress movement of the cooling medium sprayed from the spray assembly.

10. The battery module according to claim 1,
wherein the spray assembly is configured to spray at least one of a first cooling medium and a second cooling medium having different boiling points.

11. The battery module according to claim 10,
wherein the spray assembly comprises
a first storage compartment configured to store the first cooling medium, and
a second storage compartment provided separately from the first storage compartment and configured to store the second cooling medium.

12. The battery module according to claim 10,
wherein the spray assembly is configured to
control whether at least one of the first cooling medium and the second cooling medium is sprayed depending on the temperature of the electrical component.

13. The battery module according to claim 10,
wherein the spray assembly comprises
a valve configured to open and close a path through which the first cooling medium moves.

14. The battery module according to claim 10,
wherein the spray assembly is configured such that
the first cooling medium and the second cooling medium are sprayed in a first temperature range, and
the second cooling medium is sprayed in a second temperature range higher than the first temperature range.

15. The battery module according to claim 10,
wherein the first cooling medium comprises acetone, and the second cooling medium comprises water.

16. A battery pack comprising a battery module according to any one of claims 1 to 15.

17. A vehicle comprising a battery module according to any one of claims 1 to 15.
